# EUROPEAN PATENT SPECIFICATION

(11) **EP 1 928 969 B1**
(45) Date of publication and mention of the grant of the patent: **14.04.2010**
(21) Application number: 06803282.0
(22) Date of filing: 08.09.2006
(51) Int. Cl.: C09J 177/12

(54) **POLYESTER-AMIDE BASED HOT MELT ADHESIVES**
SCHMELZKLEBSTOFFE AUF POLYESTERAMIDBASIS
ADHESIFS THERMOFUSIBLES A BASE DE POLYESTER-AMIDE

(30) Priority: 08.09.2005 US 715211 P
(43) Date of publication of application: 11.06.2008
(73) Proprietor: DOW GLOBAL TECHNOLOGIES INC., Midland MI 48674 (US)
(72) Inventor: BROOS, Rene, B-2880 Bornem (BE); KOOPMANS, Rudolf, J., B-9150 Kruibeke (BE); WEVERS, Ronald, NL-4532 HL Terneuzen (NL)
(74) Representative: Raynor, John
(86) International application number: PCT/US2006/035201
(87) International publication number: WO 2007/030791

(56) References cited:
- EP-A1- 0 717 064
- EP-A2- 1 283 235
- US-A- 4 150 002
- US-B1- 6 172 167
- US-B1- 6 307 003
- US-B1- 6 353 084
- SHAUL M. AHARONI: "Hydrogen-Bonded Highly Regular Strictly Alternating Aliphatic-Aromatic Liquid-Crystalline Poly(ester amides)" MACROMOLECULES, vol. 21, 1988, pages 1941-1961, XP002411047 cited in the application
- IOANNIS AVRANITOYANNIS ET AL.: "Synthesis and study of novel biodegradable oligo(ester amide)s based on sebaccic acid, octadecanoic acid, 1,6-hexanediamine and caprolactone" POLYMER, vol. 36, no. 4, 1995, pages 857-866, XP002411048

## Description

### BACKGROUND OF THE INVENTION

The present invention relates to hot melt adhesives and more particularly to biodegradable hot melt adhesives based on thermoplastic polyester-amide compositions.
Hot melt adhesives are an important sub classification of adhesives used, for example, in bookbinding, label fixture and carton sealing applications. Hot melt adhesives have historically been based on petroleum derived polymers such as polyethylene (PE), ethylenevinyl acetate (EVA), poly caprolactone (PCL), styrenic block copolymers and blends thereof such as poly(L-lactide) and PCL (PLLA/PCL). The compositions are often further tackified, plasticized and reinforced with a variety of resins, oils and waxes which are derived from both petroleum and naturally occurring feedstocks. These compositions are generally very resistant to biodegradation. In addition, they can be difficult to remove from the substrate during recycling. It has been suggested to use various biodegradable polymers such as polyhydroxyalkanoates and poly lactic acid esters as the base polymers in hot melt adhesives. However such biodegradable adhesives suffer with respect to their mechanical and thermal stability when compared with traditional hot melt adhesives. In particular a balance between stability and degradation is crucial for biodegradable materials.

Thermoplastic polyamide resins are used as high performance hotmelt adhesives (see section "Polyamide Resins of Synthetic Resins" in Ullmann's Encyclopedia of Industrial Chemistry, 7th Edition 2006 ). However, such materials are also very resistant to degradation. Base resins are often produced from dimerized fatty acids and specific amines.

Chen et al., Journal of Applied Polymer Science, Vol. 81, 2696-2701 (2001) and International Journal of Adhesion and Adhesives 22 (2002) 75-79 describe polyesteramide polymers used as hot melt adhesives.

Peerman and Vertnik in U.S. Patent 3,377,303 describe specific compositions with piperazine derivatives exhibiting good adhesion to vinyl (PVC).

U.S. Patent 6,172,167 discloses specific polyester-amide polymers having good mechanical and environmental properties. The polymers of the '167 patent consist of building blocks with the general structure -(CB-VB)- wherein CB represents a block of constant length and VB represents a block of variable length. When the number average molecular weight of the polymer composition of the '167 patent is greater than 10,000 grams per mole, then the polymer compositions have increased strength, stiffness, elasticity and ductility properties and display improved film and fiber forming properties. The monomers to produce those polyester-amide polymers can be derived either from fossil or renewable resources.

A continuing need exists for hot-melt adhesives that exhibit acceptable mechanical and thermal properties, and that are also environmentally friendly.

### SUMMARY OF THE INVENTION

The instant invention provides a solution, at least in part, to the above-mentioned problems. More specifically, the invention provides for the use of a thermoplastic polyester-amide polymer in a hot melt adhesive formulation. The thermoplastic polyester-amide polymer is selected from the group consisting of:
a) a polymer comprising repeat units -[H1-AA]- and -[DV-AA]-, where H1 is -R-CO-NH-Ra-NH-CO-R-O- or -R-NH-CO-R-CO-NH-R-O- where Ra is R or a bond, R is independently in each occurrence an aliphatic or heteroaliphatic, alicyclic or heteroalicyclic or aromatic or heteroaromatic group, AA is a -CO-R'-CO-O- where R' is a bond or an aliphatic group, where DV is -[R"-O]- and R" is an aliphatic or heteroaliphatic, alicyclic or heteroalicyclic or aromatic or heteroaromatic group;
b) a polymer comprising repeat units -[H1-AA]-, -[DV-AA]-, and -[D2-O-AA]-, where D2 is independently in each occurrence an aliphatic or heteroaliphatic, alicyclic or heteroalicyclic or aromatic or heteroaromatic group;
c) a polymer comprising repeat units -[H1-AA]-, -[R-O-AA]-, and -M-(AA)ₙ-, wherein M is an n valent organic moiety, and n is 3 or more;
d) a polymer comprising repeat units -[H1-AA]-, -[R-O-AA]-, and -PA-(CO-OR)ₙ-, wherein PA is an n valent organic moiety, and n is 3 or more;
e) a polymer comprising repeat units -[H2-D]-, -[R-O-AA]-, and -M-(AA)ₙ-, where H2 is -CO-R -CO-NH-R-NH-CO-R-CO-O- where R is independently in each occurrence an aliphatic or heteroaliphatic, alicyclic or heteroalicyclic or aromatic or heteroaromatic group, and where D is -[R-O]-;
f) a polymer comprising repeat units -[H2-AA]-, -[R-O-AA]-, and -PA-(COOR)ₙ-;
g) a polymer having the formula HO-D1-O-[-CO-AA1,2-CO-O-D1-O-]x-[CO-AA1,2-CO-O-AD-O]y-H, wherein O-D1-O represents the residual of the diol functionality, wherein CO-AA1,2-CO represents the residual of the aliphatic dicarboxylic acid functionality or the high boiling point diacid ester functionality, wherein O-AD-O represents the residual of the polyamid diol functionality, wherein x and y are the number of repeat units in the polymer block inside the brackets;
h) a polymer comprising repeat units -[H2-D]-, -[H2-O-D2]-, [D-AA]-, and -[D2-O-AA]-;
i) a polymer having the formula HO-D1-O-[-CO-AA1,2-CO-O-D1-O-]x-[CO-AA1,2-CO-O-CO-DD-CO]y-OH, wherein O-CO-DD-CO-O represents residual of the diamide diacid functionality; and
j) mixtures thereof.

The invention also provides a method for applying a hot melt adhesive comprising the steps of: melting a hot melt adhesive formulation of the invention to produce a melted hot melt adhesive formulation; applying the melted hot melt adhesive formulation to a first substrate; and cooling the melted hot melt adhesive formulation to produce a solidified hot melt adhesive bonded to the first substrate.

The invention further provides a method for bonding a first substrate to a second substrate, comprising the steps of: positioning a hot melt adhesive formulation of the invention between a first and second substrates; melting a hot melt adhesive formulation to produce a melted hot melt adhesive formulation in contact with the first and second substrates; and cooling the melted hot melt adhesive formulation to produce a solidified hot melt adhesive bonded to the first substrate and to the second substrate.

The invention also provides a woven or nonwoven article bonded by a hot melt adhesive composition as described herein.

The invention further provides a case, carton or tray bonded with a hot melt adhesive as described herein.

The invention also provides a book comprising a multiplicity of separate sheets stacked to form a book block adhered along one edge by a film of the adhesive described herein.

The invention further provides an improved article comprising a first substrate bonded to a second substrate by way of a hot melt adhesive formulation, wherein the improvement comprises the hot melt adhesive formulation being a hot melt adhesive formulation as described herein.

### BRIEF DESCRIPTION OF DRAWINGS

Fig 1 are plots related to thermoforming data for various formulations of the instant invention.
Figs 2 are plots related to temperature dependent mechanical property data for various formulations of the instant invention.
Fig 3 is a DSC plot relating to the melting behavior of various polymers of the invention.

### DETAILED DESCRIPTION

As noted above, the invention provides for the use of thermoplastic polyester-amide polymers in hot melt adhesive formulations. The hot melt adhesive formulations of the invention exhibit several advantageous properties, including that they can be used solvent free, they possess low melt viscosity, they exhibit good adhesion to a variety of substrates including vinyl, and they exhibit shear independent flow and fast setting time. In addition, the formulations can be processed with minimal auxiliary agents, and they are biodegradable and steam removable and are therefore environmentally friendly.

In one embodiment, the instant invention is the use of a polymer comprising a first repeat unit represented by the formula -[H1-AA]- and a second repeat unit represented by the formula -[DV-AA]- in a hot melt adhesive formulation, where H1 is -R-CO-NH-Ra-NH-CO-R-O- or -R-NH-CO-R-CO-NH-R-O- where Ra is R or a bond, R is independently in each occurrence an aliphatic or heteroaliphatic, alicyclic or heteroalicyclic or aromatic or heteroaromatic group, preferably R is an aliphatic group of 1 to 10, preferably 1-4 carbon atoms and AA is a -CO-R'-CO-O- where R' is a bond or an aliphatic group, preferably of 1 to 10, preferably 2-4 carbon atoms, where DV is -[R"-O]- and R" is an aliphatic or heteroaliphatic, alicyclic or heteroalicyclic or aromatic or heteroaromatic group. Preferably, R" is selected such that R"(OH)₂ can be distilled off from the reaction mixture in subsequent derivation of the polymer. Preferably, R" is an aliphatic group of 1 to 8, more preferably 2 to 4, carbon atoms. The molecular weight of the polymer is preferably less than 2000 grams per mole.

According to one representation, the polymer of the this embodiment may be represented as having the formula HO-D1-O-[-CO-AA1-CO-O-D1-O-]x-[CO-AA1-CO-O-AD-O]_{y}-H, wherein O-D1-O represents the residual of a volatile diol functionality, wherein CO-AA1-CO represents the residual of an aliphatic dicarboxylic acid functionality (preferably short e.g. 6 or fewer carbon atoms), and O-AD-O represents a residual of a preferably short (e.g. preferably 6 or fewer carbon atoms in the diamine) symmetrical, crystallizing amid diol functionality, wherein x and y are the number of each repeat units preferably selected such that the number average molecular weight of the polymer is less than 2,000 grams per mole. Note that while for convenience the repeat units are as shown above, the polymer is not necessarily an AB block copolymer. Rather the polymer will preferably have segments with an average of 2 repeat units of the same type per segments. Order of addition and time of addition of monomers will impact blockiness of the structure.

In another embodiment, the instant invention is the use of a polymer comprising repeat units -[H1-AA]-, -[DV-AA]-, and -[D2-O-AA]- in a hot melt adhesive formulation, where D2 is independently in each occurrence an aliphatic or heteroaliphatic, alicyclic or heteroalicyclic or aromatic or heteroaromatic group, and preferably D2 is an aliphatic group. Thus, according to one representation the polymer of this embodiment may be represented as having the formula HO-D2-O-[-CO-AA1-CO-O-D1,2-O-]ₓ-[CO-AA1-CO-O-AD-O]y-H, wherein O-D2-O represents a residual non-volatile diol functionality, wherein CO-AA1-CO represents the residual of the aliphatic dicarboxylic acid functionality, wherein O-AD-O represents the residual of the polyamid diol functionality, wherein O-D1,2-O represents the residual of the volatile diol functionality or the nonvolatile diol functionality, wherein x and y are the number of each of the repeat units in the polymer. Nonvolatile diols are defined in this specification as having a molecular weight greater than 1,7 heptane diol. Note that while for convenience the reseat units are as shown above, the polymer is not necessarily an AB block copolymer. Rather the polymer will preferably have segments with an average of 2 repeat units of the same type per segments. Order of addition and time of addition of monomers will impact blockiness of the structure. The number average molecular weight of the transformed polymer preferably being greater than 4,000 grams per mole.

In another embodiment, the instant invention is the use of a polymer comprising repeat units -[H1-AA]-, -[R-O-AA]-, and -M-(AA)ₙ- in a hot melt adhesive formulation, wherein M is an n valent organic moiety, preferably aliphatic or heteroaliphatic, alicyclic or heteroalicyclic or aromatic or heteroaromatic group, preferably having up to 20 carbon atoms, and n is 3 or more. Thus, according to one representation (with a single polyfunctional moiety M built in the chain, though a plurality of M is possible) the polymer of this embodiment may have the formula HO-D1-O-[-CO-AA1-CO-O-D1-O-]ₓ- [CO-AA1-CO-O-AD-O]_{y} -CO-AA1-CO-O-M-(O-[CO-AA1-CO-O-D1]ₓ-O-[CO-AA1-CO-O-AD-O]_{y}-H)ₙ₋₁, wherein O-D1-O represents the residual of the diol functionality, wherein CO-AA1-CO represents the residual of the aliphatic dicarboxylic acid functionality, wherein O-AD-O represents the residual of the polyamid diol functionality, wherein x and y are the number of each of the repeat units in the polymer, the number average molecular weight of the polymer preferably being greater than 4,000 grams per mole.

In another embodiment, the instant invention is the use of a polymer comprising repeat units -[H1-AA]-, -[R-O-AA]-, and -PA-(CO-O-R)ₙ- in a hot melt adhesive formulation, wherein PA is an n valent organic moiety, preferably aliphatic or heteroaliphatic, alicyclic or heteroalicyclic or aromatic or heteroaromatic group, preferably having up to 20 carbon atoms, and n is 3 or more. Thus, according to one representation (with a single polyfunctional moiety PA built in the chain, though a plurality of PA is possible) the polymer may have the formula HO-D1-O-[-CO-AA1-CO-O-D1-O-]ₓ-[CO-AA1-CO-O-AD-O]_{y} -CO-PA-(CO-O-D1-[O-OC-AA1-CO-O-D1-O]ₓ-[CO-AA1-CO-O-AD-O]_{y}-H)ₙ₋₁, wherein O-D1-O represents the residual of the diol functionality, wherein CO-AA1-CO represents the residual of the aliphatic dicarboxylic acid functionality, wherein O-AD-O represents the residual of the polyamid diol functionality, wherein x and y are the number of each of the repeat units in the polymer, the number average molecular weight of the polymer preferably being greater than 4,000 grams per mole. Note that while for convenience the repeat units are as shown above, the polymer is not necessarily a block copolymer. Rather the polymer will preferably have segments with an average of 2 repeat units of the same type per segments. Order of addition and time of addition of monomers will impact blockiness of the structure.

In another embodiment, the instant invention is the use of a polymer comprising repeat units -[H2-D]-, -CR-O-AA]-, and -M-(AA)ₙ- in a hot melt adhesive formulation, where H2 is -CO-R -CO-NH-R-NH-CO-R-CO-O- where R is independently in each occurrence an aliphatic or heteroaliphatic, alicyclic or heteroalicyclic or aromatic or heteroaromatic group, preferably R is an aliphatic group of 1 to 10, preferably 2-4 carbon atoms and where D is -[R-O]- and R is a an aliphatic or heteroaliphatic, alicyclic or heteroalicyclic or aromatic or heteroaromatic group. According to one representation, the polymer of this embodiment may be represented by the formula (with a single polyfunctional moiety M built in the chain, though a plurality of M is possible): HO-D1-O-[-CO-AA1-CO-O-D1-O-]ₓ-[O-D1-O-CO-DD-CO-]_{y}-O-M-(O-[CO-AA1-CO-O-D1]x-O-[O-D1-O-CO-DD-CO]_{y}-OH)ₙ₋₁, wherein O-D1-O represents the residual of the diol functionality, wherein CO-AA1-CO represents residual of the aliphatic dicarboxylic acid functionality, wherein O-CO-DD-CO-O represents residual of the diamide diacid functionality, wherein x and y are the number of each repeat units in the polymer. Preferably, the polymer has a number average molecular weight greater than 4000. Note that while for convenience the repeat units are shown as the above structure the polymer is not necessarily a strict block copolymer. Rather the polymer will preferably have segment with an average of 2 repeat units of the same type per segments. Order of addition and time of addition of monomers will impact blockiness of the structure.

In another embodiment, the instant invention is the use of a polymer comprising repeat units -[H2-AA]-, -[R-O-AA]-, and -PA-(COOR)n- in a hot melt adhesive formulation. According to one representation of this embodiment (with a single polyfunctional moiety PA built in the chain, though a plurality of PA is possible) the polymer may be represented by the formula HO-D1-O-[-CO-AA1-CO-O-D1-O-]ₓ-[OC-DD-CO-O-D1-O]_{y} OC-PA-([-CO-O-D1-O-CO-AA1-CO-]ₓ[O-D1-O-CO-DD-CO]_{y}-OH)ₙ₋₁, wherein O-D1-O represents the residual of the diol functionality, wherein CO-AA1-CO represents residual of the aliphatic dicarboxylic acid functionality, wherein O-CO-DD-COO represents residual of the diamide diacid functionality, wherein x and y are the number of each of the repeat units in the polymer. Preferably, the polymer has a number average molecular weight greater than 4000. Note that while for convenience the repeat units are shown as the above structure the polymer is not necessarily a strict block copolymer. Rather the polymer will preferably have segments with an average of 2 repeat units of the same type per segments. Order of addition and time of addition of monomers will impact blockiness of the structure.

In another embodiment, the instant invention is the use of a polymer having the formula HO-D1-O-[-CO-AA1,2-CO-O-D1-O-]ₓ-[CO-AA1,2-CO-O-AD-O]_{y}-H in a hot melt adhesive formulation, wherein O-D1-O represents the residual of the diol functionality, wherein CO-AA1,2-CO represents the residual of the aliphatic dicarboxylic acid functionality or the high boiling point diacid ester functionality, wherein O-AD-O represents the residual of the polyamid diol functionality, wherein x and y are the number of repeat units in the polymer block inside the brackets. The number average molecular weight of the polymer is preferably greater than 4,000 grams per mole. Note that while for convenience the repeat units are as shown above, the polymer is not necessarily an AB block copolymer. Rather the polymer will preferably have segments with an average of 2 repeat units of the same type per segments. Order of addition and time of addition of monomers will impact blockiness of the structure.

In another embodiment, the instant invention is the use of a polymer comprising repeat units -[H2-D]-, -[H2-O-D2]-, [D-AA]- (preferably, -[DV-AA]-), and -[D2-O-AA]- in a hot melt adhesive formulation. Thus, according to one embodiment the transformed polymer may be represented by the formula HO-D2-O-[-CO-AA1-CO-O-D1,2-O-]ₓ-[O-D1,3-O-CO-DD-CO]_{y}-OH, wherein O-D2-O represents the residual of the nonvolatile diol functionality, wherein CO-AA1-CO represents the residual of the aliphatic dicarboxylic acid functionality, wherein O-CO-DD-CO-O represents the residual of the diamide diacid functionality, wherein O-D1,2-O represents the residual of the volatile diol functionality or the nonvolatile diol functionality, wherein x and y are the number of each of the repeat units in the polymer, the number average molecular weight of the polymer is preferably greater than 4,000 grams per mole. Note that while for convenience the repeat units are as shown above, the polymer is not necessarily a strict block copolymer. Rather the polymer will preferably have segments with an average of 2 repeat units of the same type per segments. Order of addition and time of addition of monomers will impact blockiness of the structure.

In yet another embodiment, the instant invention is the use of a polymer having the formula HO-D1-O-[-CO-AA1,2-CO-O-D1-O-]ₓ-[CO-AA1,2-CO-O-CO-DD-CO]_{y}-OH in a hot melt adhesive formulation, wherein O-D1-O represents the residual of the diol functionality, wherein CO-AA1,2-CO represents residual of the aliphatic dicarboxylic acid functionality or the high boiling point diacid ester functionality, wherein O-CO-DD-CO-O represents residual of the diamide diacid functionality, wherein x and y are the number of repeat units in the polymer block inside the brackets. The number average molecular weight of the polymer is preferably greater than 4,000 grams per mole. Note that while for convenience the repeat units are shown as the above structure the polymer is not necessarily a strict block copolymer. Rather the polymer will preferably have segments with an average of 2 repeat units of the same type per segments. Order of addition and time of addition of monomers will impact blockiness of the structure.

In another embodiment, the instant invention is a method for applying a hot melt adhesive formulation comprising the steps of: melting a hot melt adhesive formulation of the instant invention to produce a melted hot melt adhesive formulation; applying the melted hot melt adhesive formulation to a first substrate; and cooling the melted hot melt adhesive formulation to produce a solidified hot melt adhesive bonded to the first substrate.

In yet another embodiment, the instant invention is a method for bonding a first substrate to a second substrate, comprising the steps of: positioning a hot melt adhesive formulation of the instant invention between the first and second substrates; melting a hot melt adhesive formulation to produce a melted hot melt adhesive formulation in contact with the first and second substrates; and cooling the melted hot melt adhesive formulation to produce a solidified hot melt adhesive bonded to the first substrate and to the second substrate.

In another embodiment, the instant invention is an improved article comprising a first substrate bonded to a second substrate by way of a hot melt adhesive formulation, wherein the improvement comprises the hot melt adhesive formulation being a hot melt adhesive formulation of the instant invention.

Note that in the formulas shown in this application the oxygen in the repeat unit or portion of repeat units are drawn as occurring on one end of the repeat unit or portion of the repeat unit. However, the oxygen could have been shown on the other end of the repeat unit or portion of the repeat unit and still represented the same actual structure. Therefore, the structures as drawn herein shall be recognized as representing both variants.

The polymers of the invention can be prepared as described in U.S. Patent 6,172,167 and/or in applicants' international application number PCT/US2006/023450. Both references are incorporated herein by reference.

U.S. Patent 6,172,167 teaches a process for producing aliphatic polyester-amide polymers having the formula HO-D1-O-[-CO-AA1-CO-O-D1-O-]ₓ-[CO-AA1-CO-O-ADO]y-H, wherein O-D1-O represents a diol functionality, wherein CO-AA1-CO represents a short (preferably 6 or fewer carbon atoms) aliphatic dicarboxylic acid functionality, wherein O-AD-O represents a short (e.g. preferably 6 or fewer carbon atoms in the diamine) symmetrical, crystallizing amid diol functionality, wherein x and y are the number of repeat units in the polymers block inside the brackets.

As taught in USP 6,172,167, such polymers can be made from reaction mixtures comprising an amide diol. Amide diols which are particularly useful in the practice of the instant invention have the following structure;

HO-(CH₂)ₙ-CONH-(CH₂)ₘ-(X)ₖ-(CH₂)ₘ-CONH-(CH₂)ₙ-OH

Wherein X is NH, O or S, k is from 0 to 1, m is from 1 to 4 and n is from 4 to 6.

The amide diol can be prepared by any suitable means, however it has been found advantageous to prepare the amide diol by the ring opening polymerization (ROP) reaction between at least one primary diamine and at least one lactone. The preparation of the amide diol can also be carried out according to the methods described in US patent number 3,025,323 and in "Synthesis of Alternating Polyamideurethans by Reacting Diisocyanates with N,N'-Di-(6-hydroxycaproyl)alkylenediamines and N-hydroxy-alkyl-6-hydroxycaproamide" by S. Katayama et al. in J. Appl. Polym. Sci., Vol. 15, 775-796 (1971).

A primary diamine is defined in this specification as an organic compound comprising two primary amine groups. The primary diamine may also comprise secondary and tertiary amines groups. Suitable diamines are ethylene diamine, diethylene triamine, butane diamine and hexane diamine.

The lactone preferably has 4, 5 or 6 carbon atoms. Suitable lactones include γ-butyrolactone, δ-valerolactone, ε-caprolactone, pentadeca lactone, glycolide and lactides. The preferred method of carrying out such reaction is to mix, in a stainless steel stirred-tank reactor, the lactone with the diamine in a ratio of at least 2 mol of lactone per mol of diamine, preferably in a ratio of 2.0 to 2.5 mol of lactone per mol of diamine. The reaction is preferably carried out under a nitrogen blanket. The reactants may be dissolved in a solvent, but generally it is preferable to carry out the reaction in the absence of a solvent in order to eliminate the effort required in separating the solvent from the polymer composition product. Preferably the reaction temperature is maintained at a temperature which is lower than the melting point of the pure amide diol, preferably between 0 degrees Celsius (°C) and 30°C lower than the melting point, which generally results in a product comprising a high fraction of the desired amine diol product which can be used in subsequent process steps without the need for further purification. If the reaction is carried out in the absence of a solvent the whole contents of the reactor will generally solidify. It is generally advantageous to allow the reaction mixture cool down to ambient temperature and to allow the reaction product to stand for a several hours, preferably for more than 6 hours, more preferably for more than 12 hours to allow any remaining diamine to react. The amide diol product may then be removed from the reactor by heating the reactor contents, preferably under a suitable inert gas blanket, until the product melts.

A particularly preferred amide diol is the condensation product prepared from ethylene diamine and ε-caprolactone, coded C2C in the examples and which has the following structure:

HO-(CH₂)₅-CONH-(CH₂)₂-NHCO-(CH₂)₅-OH

The aliphatic polyester-amide polymer can be made by contacting an amide diol with a low molecular weight dicarboxylic acid diester and a low molecular weight diol, heated to liquefy the mixture after which the catalyst is injected.

Low molecular weight dicarboxylic acid diesters are defined as having a molecular weight less than 258 grams per mole. The alkyl moieties of the dicarboxylic acid diester are preferably the same or different and have between 1 and 3 carbon atoms. Preferably the alkyl moieties are methyl groups. The dicarboxylate moiety of the dicarboxylic acid diester preferably has between 2 and 8 carbon atoms, most preferably between 4 and 6 carbon atoms. Preferably the dicarboxylate moiety is a succinate, glutarate or adipate group. Suitable dicarboxylic acid esters include dimethyl succinate, dimethyl adipate, dimethyl oxalate, dimethyl malonate and dimethyl glutarate.

Generally the reaction is carried out in a stirred heated reactor or devolitizer, fitted with a reflux column, under an inert gas blanket. In a preferred embodiment solid amide diol is first mixed with the dicarboxylic acid diester. The mixture of amide diol and dicarboxylic acid diester is then slowly heated up to a temperature of about 140°C or until such temperature that the amide diol dissolves completely. The mixture of amide diol and dicarboxylic acid diester mixture is then maintained at this temperature for 1.5 to 3 hours. To minimize discoloration the bis-amide diol is first mixed with dimethyladipate at ambient temperature and then the mixture is heated to make it liquid and at the same time it is believed that the most reactive free amine functions are captured by transamidation reaction with dimethyladipate to amide functions. Then the diol is added and finally the catalyst (at a moment when the most aggressive species are believed to have reacted away. The low molecular weight diol is introduced in stoichiometric excess, the mixture is homogenized and finally the catalyst is injected to form the aliphatic polyester-amide pre-polymer having a number average molecular weight less than 2000 grams per mole.

Volatile diols are defined in this specification as having a molecular weight of less than 1,8-octane diol. Suitable diols include monoethylene glycol, 1,3-propanediol, 1,4-butanediol, 1,5 pentane diol, 1,6 hexane diol and 1,7 heptane diol. The volatile diol is added to the polymer and the mixture is generally homogenized by continuous stirring. The temperature is generally maintained at or above the melting temperature of the amide diol, typically at about 140 °C. The reaction is preferably carried out under an inert gas blanket at about atmospheric pressure. A catalyst is then preferably added to the reactant mixture. Any suitable compound for catalyzing transesterification and transamidification reactions may be used. Suitable catalysts include tetrabutoxy titanium (IV), zinc acetate and magnesium acetate.

The addition of the volatile diol and optional catalyst results in the evolution of a vapor comprising the low molecular weight alcohol or alcohol mixture corresponding to the alkyl moiety or moieties of the dicarboxylic acid esters, and the formation of the pre-polymer. The vapor formed is distilled off at about atmospheric pressure from the reaction mixture comprising the pre-polymer. The reaction is continued until the evolution of alcohol subsides.

In a second stage of the polycondensation process the reaction is continued in a devolatizer reactor under reduced pressure to completely remove the free volatile diols and to increase the molecular weight and convert the pre-polymer with molecular weight less than 2000 gram/mole to a full polyester amide polymer with molecular weight higher than 4000 gram/mole. At this point in time other reactive species like non-volatile diols can be admixed as to further increase the molecular weight or to introduce specific properties like branching or hydrophobic interactions.

A polymer suitable for use in a hot melt adhesive formulation of the instant invention can be made by contacting an aliphatic polyester-amide polymer having the formula HO-D1-O-[-CO-AA1-CO-O-D1-O-]ₓ-[CO-AA1-CO-O-AD-O]_{y}-H with a nonvolatile diol having the formula HO-D2-OH to form a mixture, the temperature of the mixture being sufficiently high to produce a transformed material comprising a transformed polymer having the formula HO-D2-O-[-CO-AA1-CO-O-D1,2-O-]ₓ-[CO-AA1-CO-O-ADO]y-H.

A polymer suitable for use in a hot melt adhesive formulation of the instant invention can be made by contacting an aliphatic polyester-amide polymer having the formula HO-D1-O-[-CO-AA1-CO-O-D1-O-]ₓ-[CO-AA1-CO-O-AD-O]y-H with a polyol having the formula M-(OH)ₙ to form a mixture, wherein n is 3 or more, the temperature of the mixture being sufficiently high to produce a transformed material comprising a transformed polymer having the formula HO-D1-O-[-CO-AA1-CO-O-D1-O-]ₓ- [CO-AA1-CO-O-AD-O]_{y}-CO-AA1-CO-O-M-(O-[CO-AA1-CO-O-D1]ₓ-O-[CO-AA1-CO-O-AD-O]_{y}-H)ₙ₋₁. M in the polyol M-(OH)ₙ is an n valent organic moiety, preferably aliphatic or heteroaliphatic, alicyclic or heteroalicyclic or aromatic or heteroaromatic group, preferably having up to 20 carbon atoms. More preferably, M is aliphatic. Preferred examples of M-(OH)ₙ include glycerine, trimethylolpropane, pentaerythritol, methylglucoside, sorbitol, and ethoxylated and propoxylated derivatives of those molecules.

Another polymer suitable for use in a hot melt adhesive formulation of the instant invention can be made by contacting an aliphatic polyester-amide polymer having the formula HO-D1-O-[-CO-AA1-CO-O-D1-O-]ₓ-[CO-AA1-CO-O-AD-O]y-H with a polyacid ester having the formula PA-(CO-ORb)ₙ to form a mixture, wherein n is 3 or more, the temperature of the mixture being sufficiently high to produce a transformed material comprising a transformed polymer having the formula HO-D1-O-[-CO-AA1-CO-O-D1-O-]ₓ-[CO-AA1-CO-O-AD-O]_{y}-CO-PA-(CO-O-D1-[O-OC-AA1-CO-O-D1-O]ₓ-[CO-AA1-CO-O-AD-O]_{y}-H)ₙ₋₁. PA in the polyacid ester PA-(CO-ORb)ₙ is an n valent organic moiety, preferably aliphatic or heteroaliphatic, alicyclic or heteroalicyclic or aromatic or heteroaromatic group, preferably having up to 20 carbon atoms. Preferred PA include 1,3,5 benzene tricarboxylic acid; citric acid, agaric acid, and aconitic acid. Rb is an aliphatic group of 1-10 carbon atoms, preferably 1-6 carbons, more preferably -CH3, -CH2-CH3, propyl or isopropyl.

Another polymer suitable for use in a hot melt adhesive formulation of the instant invention can be made by contacting an aliphatic polyester-amide polymer having the formula HO-D1-O-[-CO-AA1-CO-O-D1-O-]ₓ-[CO-AA1-CO-O-AD-O]y-H with a high boiling point diacid ester having the formula RO-CO-AA2-CO-OR to form a mixture, the temperature of the mixture being sufficiently high to produce a transformed material comprising a transformed polymer having the formula HO-D1-O-[-CO-AA1,2-CO-O-D1-O-]ₓ-[CO-AA1,2-CO-O-AD-O]y-H.

Another polymer suitable for use in a hot melt adhesive formulation of the instant invention can be made by contacting a pre-polymer having the formula HO-D1-O-[-CO-AA1-CO-O-D1-O-]ₓ-[O-D1-O-CO-DD-CO]_{y}-OH, wherein O-D1-O represents the residual of a volatile diol functionality, wherein O-CO-DD-CO-O represents the residual of a short (e.g. preferably 6 or fewer carbon atoms) symmetrical, crystallizing diamide diacid functionality, with a nonvolatile diol having the formula HO-D2-OH to form a mixture, the temperature of the mixture being sufficiently high to produce a transformed material comprising a transformed polymer having the formula HO-D2-O-[-CO-AA1-CO-O-D1,2-O-]ₓ-[O-D1,2-O-CO-DD-CO]_{y}-OH.

Yet another polymer suitable for use in a hot melt adhesive formulation of the instant invention can be made by contacting a polymer having the formula HO-D1-O-[-CO-AA1-CO-O-D1-O-]ₓ-[O-D1-O-CO-DD-CO]_{y}-OH with a polyol having the formula M-(OH)ₙ to form a mixture, wherein n is 3 or more, the temperature of the mixture being sufficiently high to produce a transformed material comprising a transformed polymer having the formula HO-D1-O-[-CO-AA1-CO-O-D1-O-]ₓ-[O-D1-O-CO-DD-CO-]_{y}-O-M-(O-[CO-AA1-CO-O-D1]ₓ-O-[O-D1-O-CO-DD-CO]_{y}-OH)ₙ₋₁.

Another polymer suitable for use in a hot melt adhesive formulation of the instant invention can be made by contacting a polymer having the formula HO-D1-O-[-CO-AA1-CO-O-D1-O-]ₓ-[O-D1-O-CO-DD-CO]_{y}-OH with a polyacid ester having the formula PA-(CO-OR)ₙ to form a mixture, wherein n is 3 or more, the temperature of the mixture being sufficiently high to produce a transformed material comprising a transformed polymer having the formula HO-D1-O-[-CO-AA1-CO-O-D1-O-]ₓ-[OC-DD-CO-O-D1-O]_{y}OC-PA-([-CO-O-D1-O-CO-AA1-CO-]ₓ[O-D1-O-CO-DD-CO]_{y}-OH)ₙ₋₁.

Yet another polymer suitable for use in a hot melt adhesive formulation of the instant invention can be made by contacting a polymer having the formula HO-D1-O-[-CO-AA1-CO-O-D1-O-]ₓ-[O-D1-O-CO-DD-CO]_{y}-OH with a high boiling point diacid ester having the formula RO-CO-AA2-CO-OR to form a mixture, the temperature of the mixture being sufficiently high to produce a transformed material comprising a transformed polymer having the formula HO-D1-O-[-CO-AA1,2-CO-O-D1-O-]ₓ-[CO-AA1,2-CO-O-CO-DD-CO]_{y}-OH.

The short symmetrical, crystallizing diamide diacid functionality herein is the same as defined and taught in the above-referenced USP 6,172,167. A particularly preferred diamide diacid functionality is the condensation product prepared from ethylene diamine and dimethyl adipate, coded A2A in the examples.

In this specification high boiling point dicarboxylic acid diesters are defined as aliphatic dicarboxylic acid diesters having a molecular weight greater than 202. The alkyl moieties of the dicarboxylic acid diester are preferably the same or different and have between 1 and 3 carbon atoms. Preferably the alkyl moieties are methyl groups. The dicarboxylic acid moiety preferably has between 7 and 10 carbon atoms, most preferably either 9 or 10 carbon atoms. Preferably the dicarboxylic acid moiety is an azelate or sebacate group. Preferred dicarboxylic acid esters are dimethyl azelate, dimethyl sebacate and dimethyl suberate.

Suitable nonvolatile diols in the instant invention include higher glycols such as dipropylene glycol or tripropylene glycol, polyethylene glycols (PEG's of molecular weight 400 to 8000) and EO capped polypropylene glycols of molecular weight 400 to 4000), dimer diols or Soy polyols or other high molecular weight natural diols like mentioned in Jetter et al. Phytochemistry 55, 169-176 (2000). Polyols suitable for use in the instant invention include glycerol, trimethylol propane, sorbitol and sucrose.

The reaction of the aliphatic polyester-amide polymer with the nonvolatile diol, the polyol, polyacid ester or the high boiling point dicarboxylic acid diester is generally carried out under an inert gas blanket. The mixture is then heated over a period of typically 2 to 3 hours to a temperature of about 180°C or to such temperature that the resulting amide ester polymer remains in the molten or dissolved state. The pressure is typically about atmospheric pressure. The reaction can result in the evolution of low molecular weight alcohol which is removed by distillation from the system.

The pressure in the reactor is then gradually lowered to an absolute pressure of about 5 millibar to initiate the distillation under vacuum of any remaining volatile materials. The resulting polymer composition can then be cooled to about 150°C and brought to atmospheric pressure, after which the polymer may be removed from the reactor whilst still in the molten state.

The polymers described above can be modified with, for example and without limitation thereto, other polymers, tackifiers, fillers, oil and additives to produce a hot melt adhesive formulation of the instant invention. The viscosity of the hot melt adhesive of the instant invention is preferably less than 100 Pa.sec. at 190 degrees Celsius. More preferably, the viscosity of the hot melt adhesive of the instant invention is in the range of from 5 to 50 Pa.sec. at 160 degrees Celsius. Preferably, the glass transition temperature of the hot melt adhesive of the instant invention is less than 20 degrees Celsius. Preferably, the melting point of the hot melt adhesive of the instant invention is higher than 60 degrees Celsius. Preferably, the hot melt adhesive of the instant invention exhibits a Newtonian viscosity as rheological property. The product is resistant to cold water but is removed from the substrate by application of hot water or steam.

The hot melt adhesive of the present invention is useful for a variety of articles such as disposables and construction of case and carton and nonwoven articles. Use for bookbinding and packaging are specifically contemplated. However, any adhesive application pertaining to bonding a paper substrate selected from the group consisting of Kraft paper, coated paper, highly filled paper, laminated paper, etc. to any other paper substrate and/or polymeric film substrate is also contemplated, especially when applied by extrusion or lamination by roll coaters.

The hot melt adhesives of the present invention can be applied by extrusion, spiral spray, meltblown, spray-splatter, screen printing, or roll coating by delivery from bulk or reservoirs capable of controlling the temperature within a range from about 120 °C to about 200 °C.

The adhesive composition of the present invention is also surmised to be repulpable.

As used herein, the term "aliphatic" refers to hydrocarbons which are saturated or unsaturated (alkanes, alkenes, alkynes) and which may be straight-chain or branched. Aliphatic groups can be optionally substituted with various substituents or functional groups, including among others halides, hydroxy groups, thiol groups, ester groups, ketone groups, carboxylic acid groups, amines, and amides. A "heteroaliphatic" group is an aliphatic group that contains one or more non-carbon atoms in the hydrocarbon chain (e.g., one or more non-neighboring CH₂ groups are replaced with O, S or NH).

The term "alicyclic" refers to hydrocarbons that have one or more saturated or unsaturated rings (e.g., three to ten-membered rings) and which may be bicyclic. Alicyclic groups can include portions that are branched and/or straight-chain aliphatic in combination with cyclic hydrocarbon. Alicyclic groups can be substituted, as noted above for aliphatic groups. A "heteroalicyclic" group is an alicyclic group that contains one or more heteroatoms (non-carbon atoms) in the hydrocarbon chain, in a ring or in a straight-chain or branched aliphatic portion of the alicyclic group (e.g., one or more non-neighboring CH₂ groups can be replaced with O, S or NH).

The term "aromatic" refers to hydrocarbons that comprise one or more aromatic rings which may be fused rings (e.g., as in a naphthalene group). Aromatic groups can include portions that are branched and/or straight-chain aliphatic and/or alicyclic in combination with aromatic. Aromatic groups can be substituted, as noted above for aliphatic groups. A "heteroaromatic" group is an aromatic group that contains one or more heteroatoms (non-carbon atoms) in an aromatic ring (e.g., a pyridine ring). A CH in an aromatic ring can be replaced with O, S or N. In any alicyclic or aliphatic portion of an aromatic groups, one or more non-neighboring CH₂ groups can be replaced with a heteroatom (e.g., O, S, NH).

### EXAMPLES

### Preparation of the amide diol ethylene-N,N"-dihydroxyhexanamide (C2C).

C2C monomer is prepared by reacting 1.2 kg ethylene diamine (EDA) with 4.56 kg of ε-caprolactone under a nitrogen blanket in a stainless steel reactor equipped with an agitator and a cooling water jacket. An exothermic condensation reaction between the ε-caprolactone and the EDA occurs which causes the temperature to rise gradually to 80 degrees Celsius (°C). A white deposit forms and the reactor contents solidify, at which the stirring is stopped. The reactor contents are then cooled to 20 °C and are then allowed to rest for 15 hours. The reactor contents are then heated to 140 °C at which temperature the solidified reactor contents melt. The liquid product is then discharged from the reactor into a collecting tray. A nuclear magnetic resonance study of the resulting product shows that the molar concentration of C2C in the product exceeds 80 per cent. The melting point of the C2C product is determined to be 140 °C.

### Contacting C2C with dimethyl adipate.

A devolitizer reactor is charged with 2.622 kg liquid dimethyl adipate and 2.163 kg of the solid C2C diamide diol produced as described above. The reactor contents are brought slowly under nitrogen purge to a temperature of 140 °C in order to melt the C2C in the reaction mixture.

### Contacting the composition with 1,4-butanediol without further addition of non volatile diols, acids or branching agents.

1.352 kg of 1,4-butandiol are added to the reactor contents followed by 105 milliliters (mL) of a 10 per cent by weight solution of tetrabutoxy titanium (IV) in 1,4-butanediol. The resulting reaction results in the formation of methanol which is then removed as vapor by the nitrogen purge from the reactor system. The pressure in the system is maintained at atmospheric pressure, and temperature is gradually raised to 180 °C. The reaction and distillation of methanol is continued until the evolution of methanol subsides. The pressure in the reactor is then lowered to an absolute pressure of 450 mbar and then stepwise to 20 mbar, resulting in further evolution of methanol vapor from the reaction mixture. When the flow of methanol subsides the pressure in the reactor is further lowered an absolute pressure of 0.25 mbar to initiate distillation of 1,4-butandiol, and the temperature in the reactor is gradually increased to 200 °C. When 710 mL of 1,4-butanediol has been recovered from the reactor, the vacuum in the reactor is broken and the resulting molten amide ester polymer composition is discharged from the reactor.

The above procedure is repeated to prepare six different batches of amide ester polymer compositions at 50 mole % C2C content calculated on the total amount of diols incorporated in the polymer structure (coded P1, P3, P4, P7, P8 and P9 respectively) having the following physical properties.

| Product code | Molecular weight (Mₙ) based on NMR | Melting point (°C) | Melt viscosity (Pa.s) at 180 °C* | Ultimate tensile strength (MPa) | Elongation to break (%) | Modulus (MPa) |
|---|---|---|---|---|---|---|
| P1 | 16,000 | 127 | 18 | 17 | 700 | 240 |
| P3 | 19,000 | 132 | 21 | 21 | 735 | 279 |
| P4 | 10800 | 124 | 18 | 17 | 840 | 290 |
| P7 | 9000 | 123 | 12 | 15 | 725 | 290 |
| P8 | 11800 | 122 | 24 | 23 | 970 | 260 |
| P9 | 8500 | 118 | 7 | 12 | 640 | 230 |

| | | | | | | |
|---|---|---|---|---|---|---|
| *measured with Brookfield viscometer | | | | | | |

The viscosity of the materials of the instant invention is generally Newtonian up to number average molecular weight of 20,000 gram/mole.

### Preparation of di-amide di-ester monomer A2A:

In a nitrogen atmosphere, titanium (IV) butoxide (0.92 g, 2.7 mmol), ethylene diamine (15.75 g, 0.262 mol), and dimethyl adipate (453.7 g, 2.604 mol) are loaded into a 3-neck, 1 L roundbottom flask that is stoppered and transferred to hood. Flask is placed under positive nitrogen via inlet adaptor attached to a Firestone valve. Stir-shaft with blade is inserted into flask along with stir bearing with overhead stir motor. Stoppered condenser is inserted into flask. A thermocouple inserted thru septa is also inserted into the flask. Flask is warmed with a hemisphere heating mantle that is attached to proportional temperature controller. Basic reaction profile is 2.0 hours to/at 50C; 2.0 hours to/at 60C; 2.0 hours to/at 80C; overnight at 100C. Flask is slowly cooled with stirring to ∼ 50C, stirring stopped and cooled to ∼ room temperature. Approximately 200 mL of cyclohexane is add to flask with agitation for a filterable slurry with solid collected on a medium porosity glass filtration funnel. Collected solids are washed twice with ∼50 mL of cyclohexane. Product is dried overnight in an ∼50C vacuum oven. Dried product is broken up and re-slurried in fresh cyclohexane (∼300 mL), recollected by filtration, rinsed twice with ∼50 mL cyclohexane, and dried to constant weight in a 50C vacuum oven under full pump vacuum. Yield = 59.8 grams (66%).

### Contacting the A2A monomer composition with 1,4-butanediol ("1,4 BD") without further addition of non volatile diols, acids or branching agents.

### PBA A2A-50% (polyester amide with 50 mole % A2A monomer incorporation)

The devolatizer reactor is charged at room temperature (or 50-60 °C) with 348.4 gram (2.0 moles) of dimethyl adipate (DMA) followed by 680 gram (∼7.7 moles) 1,4 butane diol and 688.8 gram (2.0 moles) of A2A (powder); with nitrogen blanket. The kneader temperature is slowly brought to 140-150 °C under nitrogen purge to ensure complete solvatation (clear solution) of the contents.

Then, still under nitrogen blanket and at 140-150 °C, , Ti(OBu)4 catalyst is injected as 41.5 gram of a 10% by weight solution in 1,4 BD (4000 ppm calculated on total esters; 4.15 g catalyst + 37.35 g BD; total content of 1,4 BD is 717 g or 7.97 moles ). At 140-150 °C, methanol starts distilling. The reactor temperature is increased stepwise to 175 °C at atmospheric pressure; initially with low (to prevent entrainment of the monomers DMA and BD) nitrogen sweep applied. Methanol fraction is distilled off and collected (theoretical amount: 256 g, 8 moles) in a cooling trap. The purpose is to maintain a constant stream of methanol distilled. When the major fraction of methanol is removed at 175 °C, the temperature is increased to 190 °C and the reactor pressure is stepwise decreased first slowly to 50-20 mbar (to avoid eventual foaming) and further to 5 mbar to complete the methanol removal and to initiate the 1,4 BD distillation. The pressure is further decreased < 1 mbar , until the steady distillation of 1,4 butane diol is observed. At the end of the reaction the temperature is raised to 200 - 220°C. Calculated amount of 1,4 BD collected: 360 g (4 moles). When the 1,4 butane diol removal is completed, the reactor is cooled to ∼150 °C (depending on torque measured) and brought to atmospheric pressure under nitrogen blanket and the polymer is collected.

The following additional resins were produced according to the methods described above. The monomers C2C and A2A were incorporated at two levels each, specifically at 25 and 50 mole %. The materials are coded PEA-C2C25%, PEA-C2C50%, PEA-A2A25% and PEA-A2A50% respectively. Data are collected in the table below. From each material 2 mm thick compression molded plaques were produced. Prior to compression molding, the materials were dried at 65 °C under vacuum for about 24 hours. Plaques of 160*160*2 mm were obtained by compression molding isothermally at 150°C, 6 minutes at 10 bar and afterwards 3 minutes at 150 bar. The samples were cooled from 150°C to room temperature at 20 °C/min. The physical property data are presented in the following table.

| | PEA C2C-50%* | PEA C2C-25% | PEA A2A-50% | PEA A2A-25% |
|---|---|---|---|---|
| Modulus (MPa) | 370 | 155 | 360 | 130-140 |
| Tensile (MPa) | 15-20 | 6 | 15 | 6-12 |
| Elongation (%) | 600-800 | 330 | 600 | 600-1200 |
| Tcrystallization (°C)** | 115(s) | 65(w) | 140(w) | 125(w) |
| Melt viscosity @ 180 C in Pa.s | 5-15 | 3-10 | 25-40 | 7-12 |

| | | | | |
|---|---|---|---|---|
| * percentage refers to mole % amide segment ** Refers to the temperature of crystallization when cooled from the melt; crystallization in sharp (s) or wider (w) temperature range | | | | |

### Mechanical properties

Load-deformation response of different PEA materials was measured on an Instron 5564 load frame. The tests are done on dog bone samples which have been conditioned for one week at 23°C and 50% humidity. The modulus is determined, using an extensometer, at a crosshead speed of 1 mm/min. After modulus determination the crosshead speed is changed to 50 mm/min

### DMS (solid state rheology)

The shear modulus was measured on the Advanced Rheometric Expansion System (ARES) with torsion rectangular setup.

Conditions: Dynamic Temperature Ramp tests were performed from -140°C till 140° at a heating rate of 2°C/min under a strain of 0.2% with a frequency of 10 rad/s. A rectangular sample with a width of about 12.6 mm and a length of about 25 mm was cut out of the compression molded plaque. Measurements were performed under nitrogen atmosphere and auto-tension option active.

### Dynamic Viscosity (melt rheology)

The complex viscosity was measured on the Advanced Rheometric Expansion System (ARES) with parallel plate setup.

Conditions frequency sweep: Dynamic Frequency Sweep tests were performed from 100 till 0.1 rad/sec (in logarithmic mode, 10 points per decade). The strain varied from 10% to 30% depending on the viscosity of the sample (still in the linear region) in order to obtain a reasonable torque level. A 25 mm disk was cut out of the compression molded plaque. Measurements were performed under nitrogen atmosphere.
DSC experiments were performed on a TA Instruments Q1000 instrument
Conditions TA Q1000:
Purge gas: nitrogen (50ml/min)
Standard aluminum pans; sample size: 5-7 mg.
Temperature calibration with Indium.
Temperature program: equilibrate at -80°C; -80 °C to 170 °C (20 °C/min); 170 °C (5 min); 170 °C to -80 °C (20 °C/min); equilibrate at -80 °C; -80 °C to 170 °C (20 °C/min).

### Further polymer examples:

### Preparation of the prepolymers

**Example A.** Preparation of Prepolymer from C2C, Dimethyl Adipate, and 1,4-Butanediol. Under an inert atmosphere into a 250 mL roundbottom flask is loaded titanium (IV) butoxide (0.194 grams, 0.571 mmol), N,N'-1,2-ethanediyl-bis[6-hydroxyhexanamide] (13.62 grams, 47.22 mmol), dimethyl adipate (65.80 grams, 0.3777 mol), and 1,4-butanediol (59.57 grams, 0.661 lmol). Polymerization reaction is run with overhead stirring, nitrogen/vacuum, heating, and use of a distillation head. Reaction profile is as follows: 2.0 hrs from 160oC to/at 175oC, N2; 5 minutes, 450 Torr; 10 minutes, 50 Torr; 5 minutes, 40 Torr; 10 minutes, 30 Torr; 10 minutes, 20 Torr; 10 minutes, 15 Torr; 90 minutes, 10 Torr, 1.0 hour, 0.425 to 0.60 Torr. Upon cooling waxy solid has Tm = 51oC(55 J/g); inherent viscosity = 0.090 dL/g (chloroform/methanol(1/1, w/w), 30.OoC, 0.5 dL/g); Mn via 1H-NMR ∼ 1098; and ∼12 mol% C2C incorporation via 1H-NMR.

**Example B.** Preparation of Prepolymer from A4A, Dimethyl Adipate, and 1,4-Butanediol. Under an inert atmosphere into a 250mL roundbottom flask is loaded titanium (IV) butoxide (0.174 grams, 0.512 mmol), dimethyl 7,12-diaza-6,13-dioxo-1,18-octadecanedioate (31.68 grams, 85.06 mmol), dimethyl adipate (44.45 grams, 0.2552 mol), and 1,4-butanediol (61.33 grams, 0.6805 mol). Polymerization reaction is run with overhead stirring, nitrogen/vacuum, heating, and use of a distillation head. Reaction profile is as follows: 2.0 hrs from 160oC to/at 175oC, N2; 5 minutes, 450 Torr; 5 minutes, 100 Torr; 10 minutes, 50 Torr; 5 minutes, 40 Torr; 10 minutes, 30 Torr; 10 minutes, 20 Torr; 10 minutes, 15 Torr; 90 minutes, 10 Torr; 1.0 hour, ∼0.400 Torr. Upon cooling waxy solid has bimodal Tm = 47 and 95oC; inherent viscosity = 0.091 dL/g (chloroform/methanol(1/1, w/w), 30.0oC, 0.5 dL/g); Mn via 1H-NMR ∼ 1049; and ∼24 mol% A4A incorporation via 1H-NMR.

### Preparation of the polymers

**Example 1.** Reaction of Prepolymer from C2C, Dimethyl Adipate, and 1,4-Butanediol with Polytetrahydrofuran. Under an inert atmosphere into a 250 mL roundbottom flask is loaded titanium (IV) butoxide (0.091 grams, 0.27 mmol), prepolymer from Example A (40.00 grams), and polytetrahydrofuran (10.00 grams, 10.17 mmol, Mn 983, TERATHANE™1000). Polymerization reaction is run with overhead stirring, nitrogen/vacuum, heating, and use of a distillation head. Reaction profile is as follows: 1.0 hrs from 160oC to/at 175oC, N2; 1.0 hours, 0.3 to 0.6 Torr, 175oC; and 6 hours, ∼0.30 Torr, 190oC. Upon cooling tough solid has Tm = 57oC(28 J/g); inherent viscosity = 0.60 dL/g (chloroform/methanol(1/1, w/w), 30.0oC; 0.5 dL/g); Mn via 1H-NMR ∼ 16000.

**Example 2.** Reaction of Prepolymer from C2C, Dimethyl Adipate, and 1,4-Butanediol with Glycerol Ethoxylate. Into a 250 mL roundbottom flask is loaded antimony oxide (0.0128 grams, 0.0439 mmol), calcium acetate monohydrate (0.0494 grams, 0.280 mmol), prepolymer from Example A (44.00 grams), glycerol ethoxylate (2.00 grams, 2.00 mmol, Mn 999). Polymerization reaction is run with overhead stirring, nitrogen/vacuum, heating, and use of a distillation head. Reaction profile is as follows: ∼1.8 hrs from 1.60oC to/at 175oC, 0.2 to 0.9 Torr. Upon cooling tough solid has Tm = 66oC(40 J/g); inherent viscosity = 0.27 dL/g (chloroform/methanol(1/1, w/w), 30.0oC, 0.5 dL/g).

**Example 3.** Reaction of Prepolymer from A4A, Dimethyl Adipate, and 1,4-Butanediol with Dimethyl Sebacate. Into a 250 mL roundbottom flask is loaded antimony oxide (0.0128 grams, 0.0439 mmol), calcium acetate monohydrate (0.0494 grams, 0.280 mmol), prepolymer from Example B (44.00 grams), and dimethyl sebacate (2.41 grams, 10.5 mmol). Polymerization reaction is run with overhead stirring, nitrogen/vacuum, heating, and use of a distillation head. Reaction profile is as follows: 2 hrs from 160oC to/at 175oC, N2; 5 minutes, 450 Torr; 5 minutes, 100 Torr; 10 minutes, 50 Torr; 5 minutes, 40 Torr; 15 minutes, 30 Torr; 15 minutes, 20 Torr; 90 minutes, 10 Torr; 2 hrs, 0.4 - 0.6 Torr, 175oC; 2.5 hrs, 0.3-0.4 Torr to/at 190oC. Upon cooling tough solid has bimodal Tm = 69, 114oC(43 J/g); inherent viscosity = 0.28 dL/g (chloroform/methanol(1/1, w/w), 30.0oC, 0.5 dL/g); Mn via 1H-NMR ∼ 7000.

**Example 4.** Reaction of Prepolymer from A4A, Dimethyl Adipate, and 1,4-Butanediol with Trimethyl 1,3,5-Benzenetricarboxylate. Into a 250 mL roundbottom flask is loaded antimony oxide (0.0128 grams, 0.0439 mmol), calcium acetate monohydrate (0.0494 grams, 0.280 mmol), prepolymer from Example B (44.00 grams), and trimethyl 1,3,5-benzenetricarboxylate (0.529 grams, 2.10 mmol). Polymerization reaction is run with overhead stirring, nitrogen/vacuum, heating, and use of a distillation head. Reaction profile is as follows: 2.3 hrs from 160oC to/at 175oC, N2; 5 minutes, 100 Torr; 10 minutes, 50 Torr; 5 minutes, 40 Torr; 15 minutes, 30 Torr, 15 minutes, 20 Torr; 90 minutes, 10 Torr; ∼2.5 hrs, 0.2 - 0.6 Torr. Upon cooling tough solid has bimodal Tm = 73, 111 oC(44 J/g); inherent viscosity = 0.29 dL/g (chloroform/methanol(1/1, w/w), 30.0°C, 0.5 dL/g).

### Lap Shear Adhesion Tests

### 1. Adhesion to wood

Thin films of PEA C2C-50% were prepared by compression molding between two mylar sheets. Rectangular specimen of 30-50 mg were cut from the PEA film and sandwiched between two 15 cm wooden spatulas with 5 cm overlap. The set up was placed between two copper plates and introduced in a press set at 180°C for 4 minutes. Minimal pressure was applied, such that the plates were just touching. After 4 minutes the platens are cooled to room temperature and the test pieces are removed.

Tensile tests (lap shear) were performed on a Zwick load frame, cross head speed 5 mm/minute. The adhesive strength is expressed as the force (in Newton) needed to delaminate the spatulas divided by the amount of adhesive (mg material) applied. As the adhesive strength is dependent on the clamping force exerted on the spatulas, the values are only indicative. Adhesive strength is greater than 20N/mg. The failure mode is cohesive.

In a second experiment, a set of wooden spatulas was contacted with 50 mg hot melt foil in the press with minimal force exerted at 170 deg C for 3 minutes. Half of the test specimen was kept for a week in standard DIN conditions; the other specimen were immersed in water at 40 deg C for 24 hrs, dried at ambient conditions for 3 hrs after which they were lap shear tested back to back with the untreated specimen. The delamination force is 30 N/mg and 10 N/mg for the humidity treated samples. After immersion in boiling water the adhesive is removed from the substrate by rubbing.

### 2. Adhesion to steel

### 2.1 Experiments with low clamp pressure

Lap shear tests are used to evaluate the adhesion of PEA and LLDPE to steel. The steel substrates used are Adhesion Panels (Ground Finish), Type RS from Q-Panel Corporation. The dimension of the steel substrate is 1x 4x 0.063 inches. The steel substrates are rinsed with acetone and dried at room temperature. A fixture is used to control the overlap length (1/2 inch) to be same for all specimens. To make the test specimen, a thin film with the thickness of 100µm is first compression molded, then the film is cut to the appropriate size and sandwiched between the two panels. Paper clips are used to clip the two panels together in the overlap region. The assembly is then heated in an oven at 200°C for 10 minutes and then the assembly is air cooled to ambient temp. Excessive material on the edges is removed. An Instron 5581 test machine with a 20001b load cell is used for lap shear adhesion testing. Large screw wedge grips are used to mount the specimen. The grip to grip distance is 4 inches with the overlapping adhesion region in the center. The rate for the testing is 0.05 inch/min. The maximum force is taken as the lap shear adhesion force and is 862 pounds per square inch for the PEA C2C-50% material of the instant invention. 2.2 Experiments with high clamping pressure
Materials tested:
PEA A2A-25%
PEA A2A-50%
PEA C2C-50%
Lap shear test procedure:
Steel strips of dimensions 10 x 2 x 0.2 cm were cleaned with ethanol and 0.1 gram of PEA film was sandwiched between two strips with 2.5 cm overlap. The test specimen were pressed in a Passadena hydraulic press with platens at 180°C and with the following pressure profile: 1 min, 1000 kg; 2 min, 5000 kg; 2 min, 10,000 kg followed by cooling for 3 minutes under 5,000 kg pressure. Lap shear test is performed on an Instron 5565 load frame with cross head speed of 1.3 mm/min. The maximum load at break is recorded:

| Sample | Max Load (kN) |
|---|---|
| PEA A2A-25% | 1.8 |
| PEA A2A-50% | 1.9 |
| PEA C2C-50% | 2.4 |

### 3. Paper tear test

A small piece (1g) of the polymer sample PEA C2C-50% was heated in a cup to about 180 C and poured onto a piece of corrugated paperboard. Immediately followed by putting another piece of corrugated paperboard on top with a minimal load. After cooling to ambient temperature the HMA/paperboard structure was positively tested for paper tear according to the bonding test set forth at page 32 of WO9733921.

### 4. Adhesion to other substrates

In a similar fashion as described above good adhesion was demonstated on polycarbonate, ABS, leather, rubber and vinyl (PVC)

### Peel Tests

The peel test was used in particular to study the bonding of PVC onto ABS. Test procedure: 150 x 35 x 2 mm rectangular specimen were cut out of a sheet ABS grade 13513 AS (Dow) and 100 x 35 x 1 mum strips were cut out of a PVC sheet as typically used for automotive interiors and obtained from Benecke. Three pairs of test strips were placed in an oven at 95 deg C. Subsequently 100 to 150 mg of molten polymer PEA C2C-25% was applied to the ABS substate and the PVC strips were pressed onto it with 50mm overlap. A weight of 10 kg was put on the samples in the oven and then the test speciment were removed from the oven and allowed to cool. Bond strength was measured in a 90 degress peel test with a fixtutre according to ASTM D 903 and D3807 placed on an Instron 5565 load frame, cross head speed 100 mm/min. The steady state force to delaminate the samples ranged between 30 and 40 Newton. The failure mode was predominantly adhesive on the PVC surface.

In summary, the use of the polymers of the instant invention as a hot melt adhesive has the following important benefits:
1. Solvent free
2. Low melt viscosity
3. Good adhesion to a variety of substrates including vinyl
4. Shear independent flow
5. Fast setting time
6. Processed with minimal auxiliary agents
7. Biodegradable
8. Steam removable
In addition, the materials exhibit a unique combination of low temperature glass transition with high melting point compared to prior art materials as shown below:

| Product | Tg (°C) | Tm (°C) |
|---|---|---|
| PEA P8 | -40 | 120 |
| EVA ref | 6 | 84 |
| PLLA homopolymer | 60 | 170 |
| PCL homopolymer | -60 | 61 |
| PLLA/PCL | -12 | 136 |

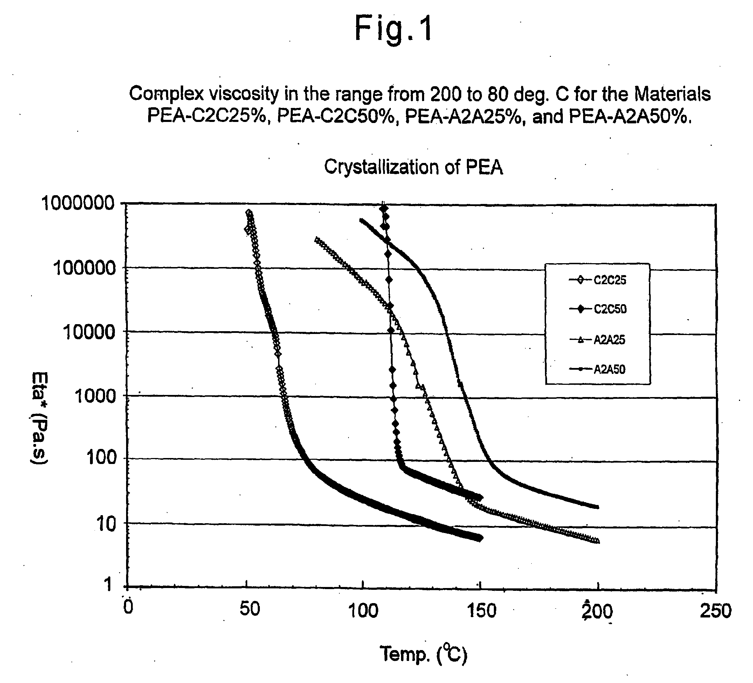

Referring now to Figs 1 therein is shown plots related to thermoforming data for various polymers of the instant invention. The data in Fig 1 show the complex viscosity of the materials as function of temperature and the fast pick up of mechanical properties using the polymers of the instant invention, i.e., a low viscosity in the molten state and when cooled from the melt a rapid solidification and pick up strength.

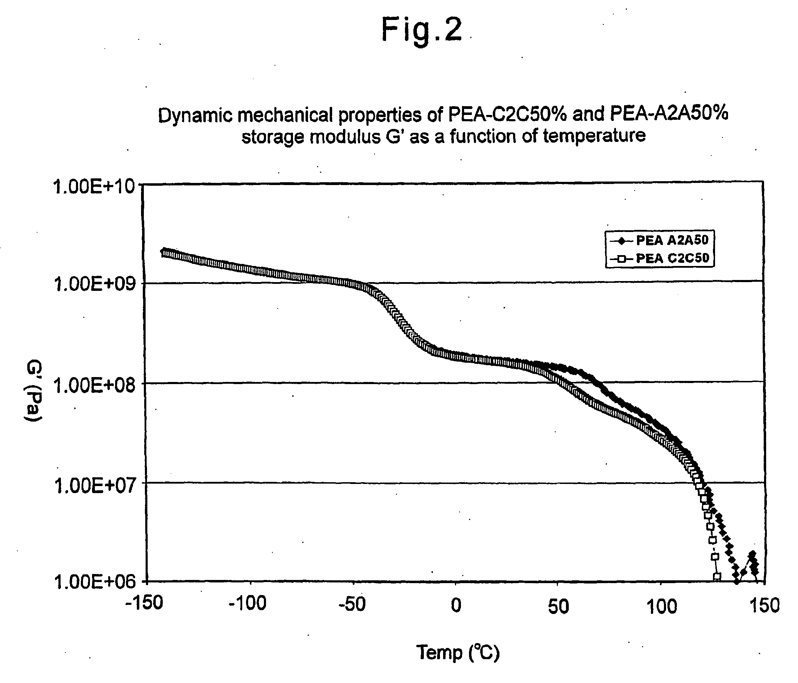

Referring now to Fig. 2 , therein is shown plots related to temperature dependent mechanical property data for various polymers of the instant invention. The data in Fig 2 show that between the wide temperature range of Tg and Tm the modulus plateau is relatively flat indicating constant mechanical properties over a wide temperature range and demonstrating that the adhesive compositions exhibit flexibility (rubber like behavior) at sub-ambient temperatures, actually from -20 up to +60 deg C. In addition, the data in Figs 2 show that after the rubbery plateau the elasticity drops sharply and the composition enters into the viscous mode.

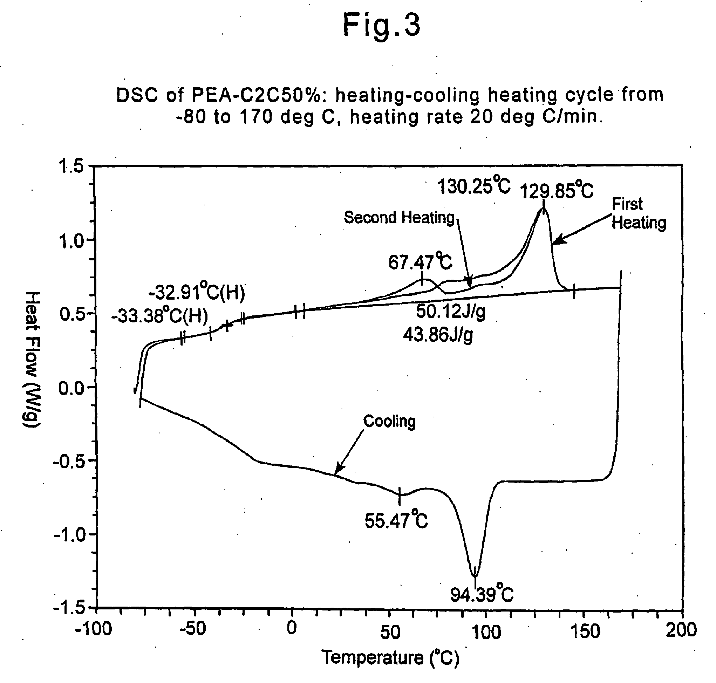

Referring now to Fig. 3, therein is shown a differential scanning calorimetry plot of a composition or polymer of the instant invention (Polymer P3) showing that the composition or polymer of the instant invention exhibits a well defined main melting point and that at the higher temperature side of the meting point the viscosity is low such that the adhesive formulations can be processed at relatively low temperatures, or that the foils can be pressed at 150-170 deg C.

As shown above, the polymers of the instant invention show good adhesive strength when used as hot melt adhesives on wood and steel. In addition, the polymers of the instant invention are biodegradable according to the Sturm test. And, the polymers of the instant invention used as hot melt adhesives can be removed from the substrate by hot water. Finally, it should be understood that all of the polymers of the '167 patent are intended to be covered by one or more of the following claims.

### CONCLUSION

While the instant invention has been described above according to its preferred embodiments, it can be modified within the spirit and scope of this disclosure. This application is therefore intended to cover any variations, uses, or adaptations of the instant invention using the general principles disclosed herein. Further, the instant application is intended to cover such departures from the present disclosure as come within the known or customary practice in the art to which this invention pertains and which fall within the limits of the following claims.

## Claims

1. The use of a thermoplastic polyester-amide polymer in a hot melt adhesive formulation, the polymer being selected from the group consisting of:
a) a polymer comprising repeat units -[H1-AA]- and -[DV-AA]-, where H1 is - R-CO-NH-Ra-NH-CO-R-O- or -R-NH-CO-R-CO-NH-R-O- where Ra is R or a bond, R is independently in each occurrence an aliphatic or heteroaliphatic, alicyclic or heteroalicyclic or aromatic or heteroaromatic group, AA is a -CO-R'-CO-O- where R' is a bond or an aliphatic group, where DV is -[R"-O]- and R" is an aliphatic or heteroaliphatic, alicyclic or heteroalicyclic or aromatic or heteroaromatic group;
b) a polymer comprising repeat units -[H1-AA]-, -[DV-AA]-, and -[D2-O-AA]-, where D2 is independently in each occurrence an aliphatic or heteroaliphatic, alicyclic or heteroalicyclic or aromatic or heteroaromatic group;
c) a polymer comprising repeat units -[H1-AA]-, -[R-O-AA]-, and -M-(AA)ₙ-, wherein M is an n valent organic moiety, and n is 3 or more;
d) a polymer comprising repeat units -[H1-AA]-, -[R-O-AA]-, and -PA-(CO-OR)ₙ-, wherein PA is an n valent organic moiety, and n is 3 or more;
e) a polymer comprising repeat units -[H2-D]-, -[R-O-AA]-, and -M-(AA)ₙ-, where H2 is -CO-R -CO-NH-R-NH-CO-R-CO-O- where R is independently in each occurrence an aliphatic or heteroaliphatic, alicyclic or heteroalicyclic or aromatic or heteroaromatic group, and where D is -[R-O]-;
f) a polymer comprising repeat units -[H2-AA]-, -[R-O-AA]-, and -PA-(COOR)n-;
g) a polymer having the formula HO-D1-O-[-CO-AA1,2-CO-O-D1-O-]ₓ-[CO-AA1,2-CO-O-AD-O]y-H, wherein O-D1-O represents the residual of a diol functionality, wherein CO-AA1,2-CO represents the residual of an aliphatic dicarboxylic acid functionality or a high boiling point diacid ester functionality, wherein O-AD-O represents the residual of a polyamid diol functionality, wherein x and y are the number of repeat units in the polymer block inside the brackets;
h) a polymer comprising repeat units -[H2-D]-, -[H2-O-D2]-, [D-AA]-, and -[D2-O-AA]-;
i) a polymer having the formula HO-D1-O-[-CO-AA1,2-CO-O-D1-O-]ₓ-[CO-AA1,2-CO-O-CO-DD-CO]_{y}-OH, wherein O-CO-DD-CO-O represents the residual of a diamide diacid functionality; and
j) mixtures thereof.

2. The use according to claim 1 wherein the polymer is of the formula HO-D1-O-[-CO-AA1-CO-O-D1-O-]ₓ-[CO-AA1-CO-O-AD-O]_{y}-H, wherein CO-AA1-CO represents the residual of an aliphatic dicarboxylic acid functionality.

3. The use according to claim 1 wherein the polymer is of the formula HO-D2-O-[-CO-AA1-CO-O-D1,2-O-]ₓ-[CO-AA1-CO-O-AD-O]y-H, wherein O-D2-O represents a residual non-volatile diol functionality, wherein CO-AA1-CO represents the residual of an aliphatic dicarboxylic acid functionality, wherein O-D1,2-O represents the residual of a volatile diol functionality or a nonvolatile diol functionality.

4. The use according to claim 1 wherein the polymer is of the formula HO-D1-O-[-CO-AA1-CO-O-D1-O-]ₓ- [CO-AA1-CO-O-AD-O]_{y} -CO-AA1-CO-O-M-(O-[CO-AA1-CO-O-D1]ₓ-O-[CO-AA1-CO-O-AD-O]_{y}-H)ₙ₋₁, wherein CO-AA1-CO represents the residual of an aliphatic dicarboxylic acid functionality.

5. The use according to claim 1 wherein the polymer is of the formula HO-D1-O-[-CO-AA1-CO-O-D1-O-]ₓ-[CO-AA1-CO-O-AD-O]_{y} -CO-PA-(CO-O-D1-[O-OC-AA1-CO-O-D1-O]ₓ-[CO-AA1-CO-O-AD-O]_{y}-H)ₙ₋₁,, wherein CO-AA1-CO represents the residual of an aliphatic dicarboxylic acid functionality.

6. The use according to claim 1 wherein the polymer is of the formula HO-D1-O-[-CO-AA1-CO-O-D1-O-]ₓ-[O-D1-O-CO-DD-CO-]_{y}-O-M-(O-[CO-AA1-CO-O-D1]ₓ-O-[O-D1-O-CO-DD-CO]y-OH)ₙ₋₁ wherein CO-AA1-CO represents the residual of an aliphatic dicarboxylic acid functionality.

7. The use according to claim 1 wherein the polymer is of the formula HO-D1-O-[-CO-AA1-CO-O-D1-O-]ₓ-[OC-DD-CO-O-D1-O]_{y} OC-PA-([-CO-O-D1-O-CO-AA1-CO-]ₓ[O-D1-O-CO-DD-CO]_{y}-OH)ₙ₋₁, wherein CO-AA1-CO represents the residual of an aliphatic dicarboxylic acid functionality.

8. The use according to claim 1 wherein the polymer is of the formula HO-D2-O-[-CO-AA1-CO-O-D1,2-O-]ₓ-[O-D1,2-O-CO-DD-CO]_{y}-OH, wherein O-D2-O represents a nonvolatile diol functionality, wherein CO-AA1-CO represents the residual of an aliphatic dicarboxylic acid functionality, and wherein O-D1,2-O represents the residual of a volatile diol functionality or a nonvolatile diol functionality.

9. A method for applying a hot melt adhesive comprising the steps of: melting a hot melt adhesive formulation of any of Claims 1-8 to produce a melted hot melt adhesive formulation; applying the melted hot melt adhesive formulation to a first substrate; and cooling the melted hot melt adhesive formulation to produce a solidified hot melt adhesive bonded to the first substrate.

10. A method for bonding a first substrate to a second substrate, comprising the steps of: positioning a hot melt adhesive formulation of any of Claims 1-8 between the first and second substrates; melting a hot melt adhesive formulation to produce a melted hot melt adhesive formulation in contact with the first and second substrates; and cooling the melted hot melt adhesive formulation to produce a solidified hot melt adhesive bonded to the first substrate and to the second substrate.

11. A woven or nonwoven article, case, carton or tray bonded by a hot melt adhesive composition of any of the preceding claims 1-8.

12. A book comprising a multiplicity of separate sheets stacked to form a book block adhered along one edge by a film of the adhesive of any of claims 1-8.

13. An improved article comprising a first substrate bonded to a second substrate by way of a hot melt adhesive formulation, wherein the improvement comprises the hot melt adhesive formulation being a hot melt adhesive formulation of any of Claims 1-8.

## Patentansprüche

1. Verwendung eines thermoplastischen Polyesteramidpolymers in einer Schmelzklebstoffformulierung, wobei das Polymer aus der Gruppe ausgewählt ist, die aus Folgendem besteht:
a) einem Polymer mit den Grundeinheiten -[H1-AA]- und -[DV-AA]-, wo H1 - R-CO-NH-Ra-NH-CO-R-O- oder -R-NH-CO-R-CO-NH-R-O- ist, wo Ra R oder eine Bindung ist, R unabhängig voneinander bei jedem Vorkommen eine aliphatische oder heteroaliphatische, alicyclische oder heteroalicyclische oder aromatische oder heteroaromatische Gruppe ist, AA -CO-R'-CO-O- ist, wo R' eine Bindung oder eine aliphatische Gruppe ist, wo DV -[R"-O]- ist und R" eine aliphatische oder heteroaliphatische, alicyclische oder heteroalicyclische oder aromatische oder heteroaromatische Gruppe ist;
b) einem Polymer mit den Grundeinheiten -[H1-AA]-, -[DV-AA]- und -[D2-O-AA]-, wo D2 unabhängig voneinander bei jedem Vorkommen eine aliphatische oder heteroaliphatische, alicyclische oder heteroalicyclische oder aromatische oder heteroaromatische Gruppe ist;
c) einem Polymer mit den Grundeinheiten -[H1-AA]-, -[R-O-AA]- und -M-(AA)ₙ-, wobei M eine n-wertige organische Einheit ist und n 3 oder mehr ist;
d) einem Polymer mit den Grundeinheiten -[H1-AA]-, -[R-O-AA]- und -PA-(CO-O-R)ₙ-, wobei PA eine n-wertige organische Einheit ist und n 3 oder mehr ist;
e) einem Polymer mit den Grundeinheiten -[H2-D]-, -[R-O-AA]- und -M-(AA)ₙ-, wo H2 -CO-R-CO-NH-R-NH-CO-R-CO-O- ist, wo R unabhängig voneinander bei jedem Vorkommen eine aliphatische oder heteroaliphatische, alicyclische oder heteroalicyclische oder aromatische oder heteroaromatische Gruppe ist und wo D -[R-O]- ist;
f) einem Polymer mit den Grundeinheiten -[H2-AA]-, -[R-O-AA]- und -PA-(COOR)ₙ-;
g) einem Polymer mit der Formel HO-D1-O-[-CO-AA1,2-CO-O-D1-O-]ₓ-[CO-AA1,2-CO-O-AD-O]_{y}-H, worin O-D1-O den Rest einer Diolfunktionalität repräsentiert, worin CO-AA1,2-CO den Rest einer aliphatischen Dicarbonsäurefunktionalität oder einer Disäureesterfunktionalität mit hohem Siedepunkt repräsentiert, worin O-AD-O den Rest einer Polyamiddiolfunktionalität repräsentiert, worin x und y die Zahl der Grundeinheiten in dem Polymerblock in den Klammern sind;
h) einem Polymer mit den Grundeinheiten -[H2-D]-, -[H2-O-D2]-, -[D-AA]- und -[D2-O-AA]-;
i) einem Polymer mit der Formel HO-DL-O-[-CO-AA1,2-CO-O-D1-O-]ₓ-[CO-AA1,2-CO-O-CO-DD-CO]_{y}-OH, worin O-CO-DD-CO-O den Rest einer Diamiddisäurefunktionalität repräsentiert; und
j) Mischungen davon.

2. Verwendung nach Anspruch 1, wobei das Polymer die Formel HO-D1-O-[-CO-AA1-CO-O-D1-O-]ₓ-[CO-AA1-CO-O-AD-O]_{y}-H hat, worin CO-AA1-CO den Rest einer aliphatischen Dicarbonsäurefunktionalität repräsentiert.

3. Verwendung nach Anspruch 1, wobei das Polymer die Formel HO-D2-O-[-CO-AA1-CO-O-D1,2-O-]ₓ-[CO-AA1-CO-O-AD-O]_{y}-H hat, worin O-D2-O eine restliche nichtflüchtige Diolfunktionalität repräsentiert, worin CO-AA1-CO den Rest einer aliphatischen Dicarbonsäurefunktionalität repräsentiert, worin O-D1,2-O den Rest einer flüchtigen Diolfunktionalität oder einer nichtflüchtigen Diolfunktionalität repräsentiert.

4. Verwendung nach Anspruch 1, wobei das Polymer die Formel HO-D1-O-[-CO-AA1-CO-O-D1-O-]ₓ-[CO-AA1-CO-O-AD-O]ₓ-CO-AA1-CO-O-M-(O-[CO-AA1-CO-O-D1]ₓ-O-[CO-AA1-CO-O-AD-O]_{y}-H)ₙ₋₁ hat worin CO-AA1-CO den Rest einer aliphatischen Dicarbonsäurefunktionalität repräsentiert.

5. Verwendung nach Anspruch 1, wobei das Polymer die Formel HO-D1-O-[-CO-AA1-CO-O-D1-O-]ₓ-[CO-AA1-CO-O-AD-O]_{y}-CO-PA-(CO-O-D1-[O-OC-AA1-CO-O-D1-O]ₓ-[CO-AA1-CO-O-AD-O]y-H)ₙ₋₁ hat, worin CO-AA1-CO den Rest einer aliphatischen Dicarbonsäurefunktionalität repräsentiert.

6. Verwendung nach Anspruch 1, wobei das Polymer die Formel HO-D1-O-[-CO-AA1-CO-O-D1-O-]ₓ-[O-D1-O-CO-DO-CO-]_{y}-O-M-(O-[CO-AA1-CO-O-D1]ₓ-O-[O-D1-O-CO-DD-CO]_{y}-OH)ₙ₋₁ hat, worin CO-AA1-CO den Rest einer aliphatischen Dicarbonsäurefunktionalität repräsentiert.

7. Verwendung nach Anspruch 1, wobei das Polymer die Formel HO-D1-O-[-CO-AA1-CO-O-D1-O-]ₓ-[-OC-DD-CO-O-D1-O]_{y}OC-PA-([-CO-O-D1-O-CO-AA1-CO-]ₓ[O-D1-O-CO-DD-CO]_{y}-OH)ₙ₋₁ hat, worin CO-AA1-CO den Rest einer aliphatischen Dicarbonsäurefunktionalität repräsentiert.

8. Verwendung nach Anspruch 1, wobei das Polymer die Formel HO-D2-O-[-CO-AA1-CO-O-D1,2-O-]ₓ-[O-D1,2-O-CO-DD-CO]_{y}-OH hat, worin O-D2-O eine nichtflüchtige Diolfunktionalität repräsentiert, worin CO-AA1-CO den Rest einer aliphatischen Dicarbonsäurefunktionalität repräsentiert, und worin O-D1,2-O den Rest einer flüchtigen Diolfunktionalität oder einer nichtflüchtigen Diolfunktionalität repräsentiert.

9. Verfahren zum Aufbringen eines Schmelzklebstoffs mit den folgenden Schritten: Schmelzen einer Schmelzklebstoffformulierung nach einem der Ansprüche 1-8, um eine geschmolzene Schmelzklebstoffformulierung herzustellen; Aufbringen der geschmolzenen Schmelzklebstoffformulierung auf ein erstes Substrat; und Abkühlen der geschmolzenen Schmelzklebstoffformulierung, um einen mit dem ersten Substrat verbundenen fest gewordenen Schmelzklebstoff herzustellen.

10. Verfahren zum Verkleben eines ersten Substrats mit einem zweiten Substrat, mit den folgenden Schritten:
Positionieren einer Schmelzklebstoffformulierung nach einem der Ansprüche 1-8 zwischen dem ersten und dem zweiten Substrat; Schmelzen einer Schmelzklebstoffformulierung, um eine geschmolzene Schmelzklebstoffformulierung in Kontakt mit dem ersten und dem zweiten Substrat herzustellen; und Abkühlen der geschmolzenen Schmelzklebstoffformulierung, um einen fest gewordenen Schmelzklebstoff herzustellen, der mit dem ersten Substrat und dem zweiten Substrat verbunden ist.

11. Web- oder Vliesartikel, Schachtel, Karton oder Schale, der/die durch eine Schmelzklebstoffzusammensetzung nach einem der vorhergehenden Ansprüche 1-8 verklebt ist.

12. Buch mit einer Vielzahl von einzelnen Blättern, die zu einem Buchblock gestapelt sind, der längs einer Kante durch einen Film des Klebstoffs nach einem der Ansprüche 1-8 verklebt ist.

13. Verbesserter Gegenstand mit einem ersten Substrat, das mittels einer Schmelzklebstoffformulierung mit einem zweiten Substrat verklebt ist, wobei die Verbesserung darin besteht, dass die Schmelzklebstoffformulierung eine Schmelzklebstoffformulierung nach einem der Ansprüche 1-8 ist.

## Revendications

1. Utilisation d'un polymère thermoplastique de type polyester-amide dans une formulation d'adhésif thermofusible, lequel polymère est choisi dans l'ensemble formé par les suivants :
a) un polymère comprenant des motifs répétés symbolisés par -[H1-AA]- et -[DV-AA]- où H1 représente -R-CO-NH-Ra-NH-CO-R-O- ou -R-NH-CO-R-CO-NH-R-O-, où Ra représente une liaison ou une entité symbolisée par R, étant entendu que R représente, indépendamment en chaque occurrence, un groupe aliphatique ou hétéroaliphatique, alicyclique ou hétéroalicyclique, ou aromatique ou hétéroaromatique, AA représente -CO-R'-CO-O- où R' représente une liaison ou un groupe aliphatique, et DV représente -[R"-O]- où R" représente un groupe aliphatique ou hétéroaliphatique, alicyclique ou hétéroalicyclique, ou aromatique ou hétéroaromatique ;
b) un polymère comprenant des motifs répétés symbolisés par -[H1-AA]-, -[DV-AA]- et -[D2-O-AA]-, où D2 représente, indépendamment en chaque occurrence, un groupe aliphatique ou hétéroaliphatique, alicyclique ou hétéroalicyclique, ou aromatique ou hétéroaromatique ;
c) un polymère comprenant des motifs répétés symbolisés par -[H1-AA]-, -[R-O-AA]- et -M-(AA)ₙ-, où M représente un fragment organique de valence n et n vaut 3 ou plus ;
d) un polymère comprenant des motifs répétés symbolisés par -[H1-AA]-, -[R-O-AA]- et -PA-(CO-O-R)ₙ-, où PA représente un fragment organique de valence n et n vaut 3 ou plus ;
e) un polymère comprenant des motifs répétés symbolisés par -[H2-D]-, -[R-O-AA]- et -M-(AA)ₙ-, où H2 représente -CO-R-CO-NH-R-NH-COR-CO-O- où R représente, indépendamment en chaque occurrence, un groupe aliphatique ou hétéroaliphatique, alicyclique ou hétéroalicyclique, ou aromatique ou hétéroaromatique, et D représente -[R-O]- ;
f) un polymère comprenant des motifs répétés symbolisés par -[H2-AA]-, -[R-O-AA]- et -PA-(CO-O-R)ₙ- ;
g) un polymère de formule HO-D1-O-[-CO-AA1,2-CO-O-D1-O-]ₓ-[CO-AA1,2-CO-O-AD-O]_{y}-H, dans laquelle O-D1-O représente le reste d'un composé fonctionnel de type diol, CO-AA1,2-CO représente le reste d'un composé fonctionnel de type acide dicarboxylique aliphatique ou de type ester de diacide à haut point d'ébullition, O-AD-O représente le reste d'un composé fonctionnel de type polyamide-diol, et les indices x et y indiquent le nombre de motifs répétés dans le bloc polymère représenté entre les crochets ;
h) un polymère comprenant des motifs répétés symbolisés par -[H2-D]-, -[H2-O-D2]-, -[D-AA]- et -[D2-O-AA]- ;
i) un polymère de formule HO-D1-O-[-CO-AA1,2-CO-O-D1-O-]ₓ-[CO-AA1,2-CO-O-CO-DD-CO]_{y}-OH, dans laquelle O-CO-DD-CO-O représente le reste d'un composé fonctionnel de type diamide-diacide ;
j) et les mélanges de tels polymères.

2. Utilisation conforme à la revendication 1, pour laquelle le polymère a pour formule HO-D1-O-[-CO-AA1-CO-O-D1-O-]ₓ-[CO-AA1-CO-O-AD-O]_{y}-H, dans laquelle CO-AA1-CO représente le reste d'un composé fonctionnel de type acide dicarboxylique aliphatique.

3. Utilisation conforme à la revendication 1, pour laquelle le polymère a pour formule HO-D2-O-[-CO-AA1-CO-O-D1,2-O-]ₓ-[CO-AA1-CO-O-AD-O]_{y}-H, dans laquelle O-D2-O représente le reste d'un composé fonctionnel de type diol non-volatil, CO-AA1-CO représente le reste d'un composé fonctionnel de type acide dicarboxylique aliphatique, et O-D1,2-O représente le reste d'un composé fonctionnel de type diol volatil ou de type diol non-volatil.

4. Utilisation conforme à la revendication 1, pour laquelle le polymère a pour formule HO-D1-O-[-CO-AA1-CO-O-D1-O-]ₓ-[CO-AA1-CO-O-AD-O]_{y}-CO-AA1-CO-O-M-(O-[CO-AA1-CO-O-D1]ₓ-O-[CO-AA1-CO-O-AD-O]_{y}-H)ₙ₋₁, dans laquelle CO-AA1-CO représente le reste d'un composé fonctionnel de type acide dicarboxylique aliphatique.

5. Utilisation conforme à la revendication 1, pour laquelle le polymère a pour formule HO-D1-O-[-CO-AA1-CO-O-D1-O-]ₓ-[CO-AA1-CO-O-AD-O]_{y}-CO-PA-(CO-O-D1-[O-OC-AA1-CO-O-D1-O]ₓ-[CO-AA1-CO-O-AD-O]_{y}-H)ₙ₋₁, dans laquelle CO-AA1-CO représente le reste d'un composé fonctionnel de type acide dicarboxylique aliphatique.

6. Utilisation conforme à la revendication 1, pour laquelle le polymère a pour formule HO-D1-O-[-CO-AA1-CO-O-D1-O-]ₓ-[O-D1-O-CO-DD-CO-]_{y}-O-M-(O-[CO-AA1-CO-O-D1]ₓ-O-[O-D1-O-CO-DD-CO]_{y}-OH)ₙ₋₁, dans laquelle CO-AA1-CO représente le reste d'un composé fonctionnel de type acide dicarboxylique aliphatique.

7. Utilisation conforme à la revendication 1, pour laquelle le polymère a pour formule HO-D1-O-[-CO-AA1-CO-O-D1-O-]ₓ-[OC-DD-CO-O-D1-O]_{y}OC-PA-([CO-O-D1-OCO-AA1-CO-]ₓ[O-D1-O-CO-DD-CO]_{y}-OH)ₙ₋₁, dans laquelle CO-AA1-CO représente le reste d'un composé fonctionnel de type acide dicarboxylique aliphatique.

8. Utilisation conforme à la revendication 1, pour laquelle le polymère a pour formule HO-D2-O-[-CO-AA1-CO-O-D1,2-O-]ₓ-[O-D1,2-O-CO-DD-CO]_{y}-OH, dans laquelle O-D2-O représente le reste d'un composé fonctionnel de type diol non-volatil, CO-AA1-CO représente le reste d'un composé fonctionnel de type acide dicarboxylique aliphatique, et O-D1,2-O représente le reste d'un composé fonctionnel de type diol volatil ou de type diol non-volatil.

9. Procédé d'application d'un adhésif thermofusible, lequel procédé comporte les étapes suivantes :
faire fondre une formulation d'adhésif thermofusible du type décrit dans l'une des revendications 1 à 8, pour produire une formulation d'adhésif thermofusible fondu ;
appliquer cette formulation d'adhésif thermofusible fondu sur un premier substrat ;
et faire refroidir la formulation d'adhésif thermofusible fondu pour produire un adhésif thermofusible solidifié attaché à ce premier substrat.

10. Procédé de collage d'un premier substrat et d'un deuxième substrat, lequel procédé comporte les étapes suivantes :
disposer une formulation d'adhésif thermofusible du type décrit dans l'une des revendications 1 à 8 entre les premier et deuxième substrats ;
faire fondre la formulation d'adhésif thermofusible pour produire une formulation d'adhésif thermofusible fondu, en contact avec les premier et deuxième substrats ;
et faire refroidir la formulation d'adhésif thermofusible fondu pour produire un adhésif thermofusible solidifié attaché au premier substrat et au deuxième substrat.

11. Article en étoffe tissée ou non-tissée, boîte, carton ou plateau, collé au moyen d'une composition d'adhésif thermofusible du type décrit dans l'une des revendications 1 à 8 précédentes.

12. Livre comprenant de multiples feuilles séparées, empilées de manière à former un bloc-livre et collées le long de l'un de leurs bords au moyen d'un film d'un adhésif du type décrit dans l'une des revendications 1 à 8.

13. Article amélioré comprenant un premier substrat collé à un deuxième substrat au moyen d'une formulation d'adhésif thermofusible, l'amélioration résidant en ce que la formulation d'adhésif thermofusible est une formulation d'adhésif thermofusible du type décrit dans l'une des revendications 1 à 8.
